# EUROPEAN PATENT APPLICATION

(11) **EP 4 834 541 A1**
(43) Date of publication of application: **04.11.2026**
(21) Application number: 26175683.7
(22) Date of filing: 30.04.2026
(51) Int. Cl.: B25J 11/00, B25J 9/16, G06N 3/008

(54) **CONTROL APPARATUS, ROBOT, CONTROL METHOD, AND PROGRAM**

(30) Priority: 02.05.2025 JP 2025076534
(71) Applicant: Casio Computer Co., Ltd., Tokyo 151-8543 (JP)
(72) Inventor: TERAZAKI, Tsutomu, Tokyo, 205-8555 (JP); MAYUZUMI, Kouki, Tokyo, 205-8555 (JP); MAEDA, Maki, Tokyo, 205-8555 (JP)
(74) Representative: Plougmann Vingtoft a/s

(57) **Abstract**

A control apparatus (10) includes one or more processors (11). The one or more processors are configured to, transition, based on a drowsiness value representing a degree of pseudo drowsiness of a robot (1), an operation mode of the robot between a normal mode representing that the robot (1) is not sleeping and a sleep mode representing that the robot (1) is sleeping, determine, based on detection data from a sensor (50) included in the robot (1), a type of an external stimulus, in response to determining that the type of the external stimulus is a predetermined first external stimulus (S1), change the drowsiness value in a first direction that increases the drowsiness, and in response to determining that the type of the external stimulus is a second external stimulus (S2), change the drowsiness value in a second direction that decreases the drowsiness value.

## Description

### BACKGROUND OF THE INVENTION

### TECHNICAL FIELD

The present disclosure relates to a control apparatus, a robot, a control method, and a program.

### DESCRIPTION OF RELATED ART

Conventionally, a robot that can behave like a living thing by detecting a surrounding situation with a sensor and performing an operation in accordance with the detected situation is known. Among such robots, there is the robot that can transition to a sleep mode that imitates a sleep state. For example, Japanese Unexamined Patent Application Publication No. 2019-107461 discloses a technique for suppressing power consumption of a robot by transitioning the robot to a sleep mode when a state in which no person is present around the robot continues for a predetermined time or more, or when a remaining battery capacity becomes low.

However, in the above conventional technique, since transition timing to the sleep mode is determined from a viewpoint of suppressing power consumption, the robot, which is an object to transition to the sleep mode, does not look like a living thing.

An object of the present disclosure is to realize the transition to the sleep mode that makes the robot look like the living thing.

### SUMMARY OF THE INVENTION

In order to solve the above problem, a control apparatus (10) according to one aspect of the present disclosure includes:
one or more processors (11) configured to:
transition, based on a drowsiness value representing a degree of pseudo drowsiness of a robot (1), an operation mode of the robot between a normal mode representing that the robot (1) is not sleeping and a sleep mode representing that the robot (1) is sleeping,
determine, based on detection data from a sensor (50) included in the robot (1), a type of an external stimulus received by the robot (1),
in response to determining that the type of the external stimulus received by the robot (1) is a predetermined first external stimulus (S1), change the drowsiness value in a first direction in which the drowsiness becomes higher, and
in response to determining that the type of the external stimulus received by the robot (1) is a second external stimulus (S2) different from the first external stimulus (S1), change the drowsiness value in a second direction that decreases the drowsiness value, the second direction being opposite to the first direction.

### ADVANTAGEOUS EFFECTS OF INVENTION

According to the present disclosure, it is possible to realize a transition to a sleep mode that makes a robot look like a living thing.

### BRIEF DESCRIPTION OF THE DRAWINGS

FIG. 1 is a diagram illustrating an external appearance of a robot.
FIG. 2 is a schematic diagram illustrating a configuration of a main body of the robot.
FIG. 3 is a block diagram illustrating a functional configuration of the robot.
FIG. 4 is a diagram illustrating state data.
FIG. 5 is a diagram illustrating an arrangement range of a touch sensor.
FIG. 6 is a diagram illustrating a drowsiness value table.
FIG. 7 is a flowchart illustrating a control procedure of a robot control process.
FIG. 8 is a flowchart illustrating the control procedure of an environment change determination process.
FIG. 9 is a flowchart illustrating the control procedure of an external stimulus determination process.
FIG. 10 is a flowchart illustrating the control procedure of the external stimulus determination process.
FIG. 11 is a flowchart illustrating the control procedure of a mode transition process.

### DETAILED DESCRIPTION

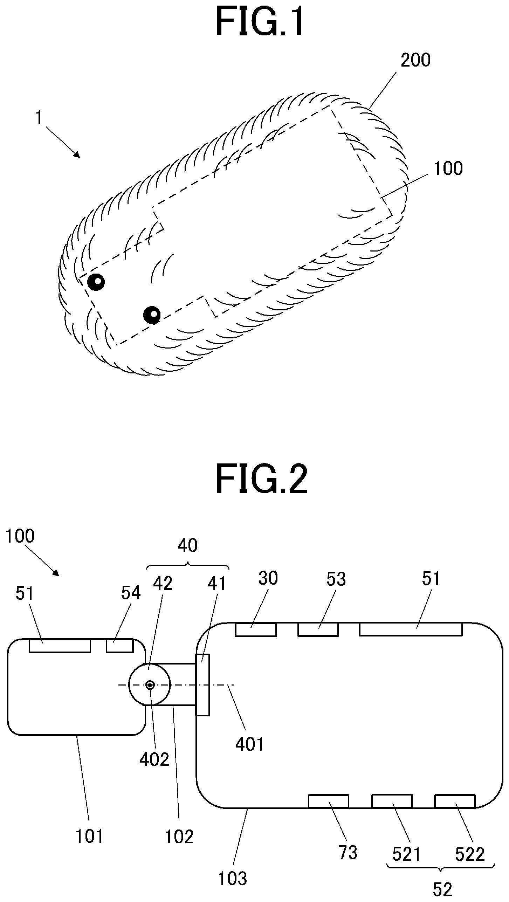

Hereinafter, embodiments of the present disclosure will be described with reference to the drawings. As illustrated in FIG. 1, a robot 1 includes a main body 100 and an outer covering 200 that covers an entire surface of the main body 100. The robot 1 is a pet robot that imitates a small living thing. The robot 1 can perform a plurality of different operations that imitate a gesture of the living thing. The outer covering 200 is made of a material with flexibility and deforms in accordance with movement of the main body 100. The outer covering 200 includes, for example, fur formed by pile fabric, a decorative member imitating eyes, and the like. On an inner surface (a surface contacting the main body 100) of the outer covering 200, an engaging section (not shown) that can be engaged with a fastener (not shown) provided on the surface of the main body 100 is provided. By engaging the engaging section with the fastener, it is possible to prevent the main body 100 and the outer covering 200 from significantly shifting. The numbers of engaging sections and fasteners are kept to a minimum necessary so as not to hinder movement of the main body 100 and so as to facilitate attachment and detachment of the outer covering 200. According to the present embodiment, the engaging sections and the fasteners are provided at three positions in total, specifically, positions of left and right eyes of the robot 1 and a rear end portion.

As illustrated in FIG. 2, the main body 100 of the robot 1 includes a head section 101, a torso section 103, and a connecting section 102 that connects the head section 101 and the torso section 103. The main body 100 includes a driver 40 for moving the head section 101 with respect to the torso section 103. In the robot 1, the head section 101 corresponds to a movable section. The driver 40 includes a twist motor 41 and a vertical-motion motor 42. The twist motor 41 is a servo motor that rotates the head section 101 and the connecting section 102 about a first rotation axis 401 extending in an extending direction of the connecting section 102 within a predetermined angular range. By operation of the twist motor 41, a motion in which the robot 1 twists the head section 101 is realized. The vertical-motion motor 42 is a servo motor that rotates the head section 101 about a second rotation axis 402 perpendicular to the first rotation axis 401 within a predetermined angular range. By the vertical-motion motor 42, a motion in which the robot 1 moves the head section 101 upward and downward is realized. A direction of upward and downward movement of the head section 101 can also be a direction inclined with respect to a vertical direction depending on a twist angle of the head section 101 by the twist motor 41. By finely and periodically operating the twist motor 41 and/or the vertical-motion motor 42, a motion in which the robot 1 oscillates or shakes the head section 101 is realized. By appropriately changing and combining timing, magnitude, and speed of operation of the twist motor 41 and the vertical-motion motor 42, the robot 1 can be caused to perform various operations, for example, a rejoicing operation, a surprising operation, and a breathing operation that imitates breathing of the living thing. Among these, the breathing operation is one aspect of a spontaneous operation by the robot 1. The main body 100 includes a touch sensor 51, a motion sensor 52, an illuminance sensor 53, a microphone 54, a sound output section 30, and a power receiving coil 73. The motion sensor 52 includes an acceleration sensor 521 and a gyro sensor 522. The touch sensor 51 is provided on an upper portion of each of the head section 101 and the torso section 103. The motion sensor 52 and the power receiving coil 73 are provided near the lower surface of the torso section 103. The illuminance sensor 53 and the sound output section 30 are provided on an upper portion of the torso section 103. The microphone 54 is provided on an upper portion near a base of the head section 101.

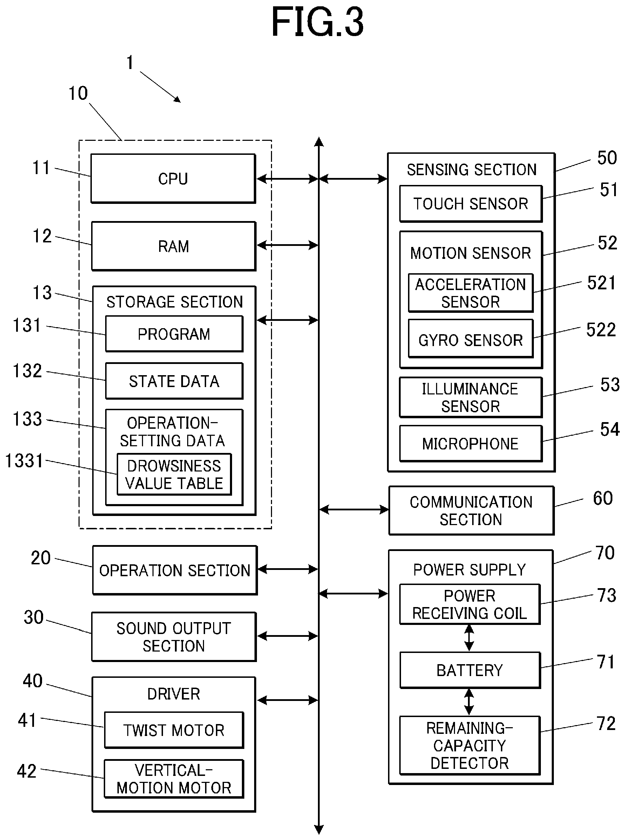

As illustrated in FIG. 3, the robot 1 includes a CPU 11 (Central Processing Unit) (one or more processors), a RAM 12 (Random Access Memory), a storage section 13, an operation section 20, the sound output section 30, the driver 40, a sensing section 50 (sensor), a communication section 60, and a power supply 70. Among these, a control apparatus 10 includes the CPU 11, the RAM 12, and the storage section 13. Each component of the robot 1 is connected via a data transmission path such as a bus. Each functional component illustrated in FIG. 3 is provided in the main body 100. The CPU 11 is a processor that reads and executes a program 131 stored in the storage section 13 and controls an operation of the robot 1 by performing various arithmetic processing. The robot 1 may include a plurality of processors (for example, a plurality of CPUs), and the plurality of processors may execute a plurality of processes executed by the CPU 11 according to the present embodiment. In this case, one or more processors are constituted by the plurality of processors. In this case, the plurality of processors may be involved in common processing, or the plurality of processors may independently execute different processing in parallel. The RAM 12 provides the CPU 11 with a work memory space and stores temporary data.

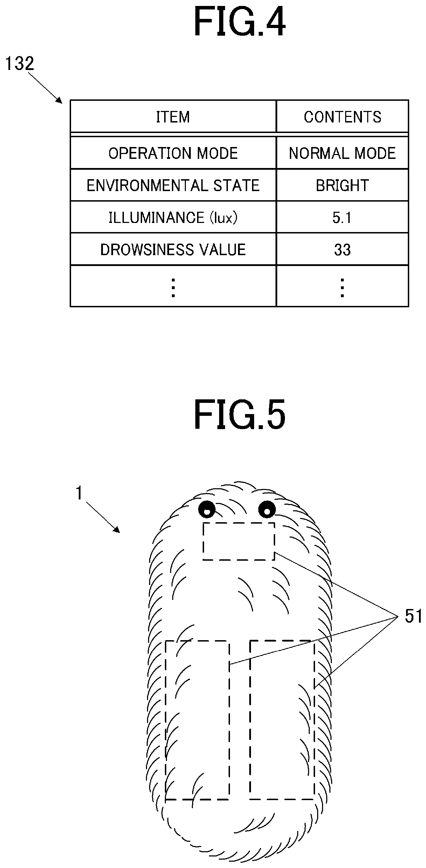

The storage section 13 is a non-transitory recording medium readable by the CPU 11 as the computer, and stores the program 131 and various data. The storage section 13 includes, for example, a nonvolatile memory such as a flash memory. The program 131 is stored in the storage section 13 in a form of a computer-readable program code. The data stored in the storage section 13 includes state data 132 and operation-setting data 133, and the like. In the state data 132, data representing a current state of the robot 1 and a current state of a surrounding environment are recorded. For example, as illustrated in FIG. 4, in the state data 132, "operation mode", "environmental state", "illuminance", and "drowsiness value", and the like are recorded. The "operation mode" of the robot 1 in the present embodiment transitions between a "normal mode" representing that the robot 1 is not sleeping and a "sleep mode" representing that the robot 1 is sleeping. The "environmental state" represents brightness around the robot 1 and is either "bright" or "dark". The "illuminance" is a latest illuminance (unit: lux) detected by the illuminance sensor 53. The "drowsiness value" is a parameter indicating that pseudo drowsiness of the robot 1 is stronger as the value is larger. In the state data 132, in addition to the data illustrated in FIG. 4, an emotion parameter representing a pseudo emotion of the robot 1, a personality parameter representing a pseudo personality of the robot 1, growth-day-count data of the robot 1, and the like are recorded. The state data 132 are sequentially updated in accordance with a history of operations of the robot 1, and the like. In the operation-setting data 133 illustrated in FIG. 3, operation contents such as a response operation performed by the robot 1 in accordance with a state of the robot 1 and contents of a stimulus from outside (external stimulus), and an automatically generated operation spontaneously performed by the robot 1 irrespective of the external stimulus are set. Settings related to the operation contents include, for example, settings of operation timing and operation amount of the twist motor 41 and the vertical-motion motor 42 of the driver 40, and settings of pitch (height), length, and volume of sound output by the sound output section 30, and the like. The operation-setting data 133 further includes a drowsiness value table 1331 referenced in a robot control process described below. The contents of the drowsiness value table 1331 will be described below.

The operation section 20 includes operation buttons and operation knobs, and the like, for turning on and off power and adjusting volume of sound output by the sound output section 30, and the like. The operation section 20 outputs, to the CPU 11, operation information in accordance with an input operation on the operation buttons, the operation knobs, and the like. The sound output section 30 includes a speaker and outputs sound at a pitch, a length, and a volume in accordance with a control signal and sound data transmitted from the CPU 11. The sound may be a sound imitating a cry of a living thing. The driver 40 operates the twist motor 41 and the vertical-motion motor 42 described above in accordance with a control signal transmitted from the CPU 11.

The sensing section 50 includes the touch sensor 51, the motion sensor 52, the illuminance sensor 53, and the microphone 54 described above, and outputs, to the CPU 11, sensing data obtained by each sensor and the microphone 54. The touch sensor 51 detects contact of an object with the robot 1. Here, the object may be a user. The touch sensor 51 according to the present embodiment can further detect strength of the contact. The touch sensor 51 includes, for example, a pressure sensor such as a capacitive sensor, or a piezoelectric sensor, and outputs, to the CPU 11, sensing data related to presence or absence of the contact with the robot 1. The touch sensor 51 detects the strength of the contact with the robot 1 and outputs the strength to the CPU 11. The touch sensor 51 may be configured to sense, as the contact, pressure equal to or greater than a predetermined first threshold and not to sense pressure less than the first threshold. In this case, the first threshold may be changeable by the CPU 11. Increasing the first threshold corresponds to reducing sensing sensitivity of the contact by the touch sensor 51. As illustrated in FIGS. 2 and 5, the touch sensor 51 is disposed in the robot 1 on an upper surface of the head section 101, a left side of an upper surface of the torso section 103, and a right side of the upper surface of the torso section 103. According to the present embodiment, a head section 101 side of the robot 1 is defined as front, a torso section 103 side is defined as rear, and, when viewed from a direction perpendicular to the upper surface of the torso section 103, a direction perpendicular to a front-rear direction is defined as a left-right direction. The left side of the upper surface of the torso section 103 refers to a side left of a center of the torso section 103 in the left-right direction when viewed from the direction perpendicular to the upper surface of the torso section 103, and the right side of the upper surface of the torso section 103 refers to a side right of the center of the torso section 103 in the left-right direction when viewed from the direction perpendicular to the upper surface of the torso section 103. In response to an object contacting a surface of the robot 1 within an arrangement range of the touch sensor 51, the touch sensor 51 senses the contact. On the other hand, in response to the object contacting a portion of the surface of the robot 1 outside the arrangement range of the touch sensor 51 (for example, a portion corresponding to a "neck" between the head section 101 and the torso section 103), the touch sensor 51 does not sense the contact. The arrangement of the touch sensor 51 illustrated in FIGS. 2 and 5 is an example, and an arrangement range and a number of the touch sensor 51 can be changed as appropriate.

The acceleration sensor 521 and the gyro sensor 522 of the motion sensor 52 detect movement of the robot 1. The movement of the robot 1 includes movement according to a mechanical action applied to the robot 1. The motion sensor 52 may also be referred to as an inertial sensor. The acceleration sensor 521 senses acceleration in each of three orthogonal axis directions and outputs sensing data to the CPU 11. The gyro sensor 522 senses an angular velocity around each of the three orthogonal axis directions and outputs sensing data to the CPU 11. Since each of the acceleration sensor 521 and the gyro sensor 522 has three detection axes, the motion sensor 52 is also referred to as a six-axis sensor. The illuminance sensor 53 detects brightness around the robot 1 and outputs detection data to the CPU 11. The microphone 54 detects sound around the robot 1 and outputs the detection data of the sound to the CPU 11. The microphone 54 may be configured to sense, as the external stimulus, sound having a volume equal to or greater than a predetermined second threshold and not to sense sound having a volume less than the second threshold. In this case, the second threshold may be changeable by the CPU 11. Increasing the second threshold corresponds to reducing the sensing sensitivity of sound by the microphone 54.

The communication section 60 is a communication module including an antenna, a modulation/demodulation circuit, a signal processing circuit, and the like, and performs wireless data communication with an external device in accordance with a predetermined communication standard. The power supply 70 includes a battery 71, a remaining-capacity detector 72, and the power receiving coil 73. The battery 71 supplies power to each component of the robot 1. The battery 71 according to the present embodiment is a secondary battery that can be repeatedly charged by a contactless charging method. The remaining-capacity detector 72 detects a remaining battery capacity of the battery 71 in accordance with a control signal transmitted from the CPU 11 and outputs a detection result to the CPU 11. Charging operation of the battery 71 is performed in a state where the robot 1 is stored (placed) inside a dedicated power supply device (storage compartment, charging dock) that is not shown. In the power supply device, a power transmitting coil is provided at a position facing the power receiving coil 73 in a state where the robot 1 is stored. The power receiving coil 73 of the robot 1 supplies the battery 71 with an electric current generated by electromagnetic induction in accordance with a magnetic field generated by the power transmitting coil. According to such a configuration, when the robot 1 is stored in the power supply device, the charging operation of the battery 71 is automatically started. The charging method of the battery 71 is not limited to the contactless charging method and may be a contact charging method.

Next, operations of the robot 1 will be described. In accordance with control by the CPU 11, the robot 1 performs the response operation to the external stimulus and the spontaneous operation (automatically generated operation). The CPU 11 detects that the robot 1 has received the external stimulus and determines a type of the external stimulus received by the robot 1 based on, for example, the detection data of the touch sensor 51, the motion sensor 52, and the microphone 54 among the sensing section 50 as the "sensor". Then, the CPU 11 determines an operation (response operation) corresponding to the type of the external stimulus received by the robot 1 and causes the robot 1 to perform the determined operation. More specifically, the CPU 11 drives the twist motor 41 and the vertical-motion motor 42 of the driver 40 and causes the sound output section 30 to output sound so that the robot 1 performs the operation. A plurality of candidates of operations to be performed by the robot 1 in response to detecting an external stimulus are predetermined for each external stimulus and are registered in the operation-setting data 133. The CPU 11 determines one operation from among a plurality of operations corresponding to the detected external stimulus in accordance with a predetermined rule and causes the robot 1 to perform the one operation. More specifically, a selection probability is predetermined for each of the plurality of operations corresponding to the external stimulus, and the CPU 11 selects and determines one operation in accordance with the probability. Candidates of operations that can be selected in response to an external stimulus also change depending on, for example, a personality parameter of the robot 1 at that time, an environmental state (surrounding brightness), and whether or not the robot 1 is in a sleep mode imitating sleep. Thus, each time the external stimulus is detected, various operations corresponding to individuality, a situation, and the like of the robot 1 are performed. The probability assigned to each of the plurality of operations changes depending on growth days of the robot 1 at that time. Thus, a change in operation according to growth of the robot 1 is expressed. In addition to the response operation corresponding to the external stimulus described above, the CPU 11 causes the robot 1 to perform the spontaneous automatically generated operation at a predetermined timing.

A transition operation to the sleep mode performed in the robot 1 will be described. The CPU 11 transitions the operation mode of the robot 1 between the normal mode and the sleep mode based on a magnitude of the drowsiness value in the state data 132 illustrated in FIG. 4. In response to the robot 1 transitioning from the normal mode to the sleep mode, the CPU 11 causes the robot 1 to perform a sleep-entry operation indicating that the robot 1 has fallen asleep. The sleep-entry operation may be selected from among a plurality of predetermined operations. Different sleep-entry operations may be performed in accordance with a state of the robot 1 such as personality. Thereafter, while the robot 1 operates in the sleep mode, the CPU 11 causes the robot 1 to perform, in response to the external stimulus, the response operation predetermined as the operation in the sleep mode. In response to the robot 1 being transitioned from the sleep mode to the normal mode, the CPU 11 causes the robot 1 to perform a wake-up operation indicating that the robot 1 has woken up. The wake-up operation may be selected from among a plurality of predetermined operations. Different wake-up operations may be performed in accordance with the state of the robot 1 such as personality. Thereafter, while the robot 1 operates in the normal mode, the CPU 11 causes the robot 1 to perform, in response to the external stimulus, the response operation predetermined as the operation in the normal mode. In the response operation in the sleep mode, the operation contents of the driver 40 and the sound output section 30 are predetermined such that the robot 1 looks like it is sleeping. For example, the response operation in the sleep mode may be configured, compared with the response operation in the normal mode, to reduce a range of movement of the head section 101, shorten a movement time, and reduce magnitude of the sound output by the sound output section 30.

In the drowsiness value in the state data 132 illustrated in FIG. 4, a minimum value is set to "3" and a maximum value is set to "100". During a period in which the robot 1 operates in the normal mode, in response to the drowsiness value increasing from a value equal to or less than the predetermined first threshold to the value greater than the first threshold, the CPU 11 transitions the operation mode of the robot 1 from the normal mode to the sleep mode. According to the present embodiment, the first threshold is set to "95". "The drowsiness value increasing from the value equal to or less than the first threshold to the value greater than the first threshold" corresponds to "the drowsiness value changes toward a first direction side across the first threshold". Increasing the drowsiness value corresponds to "changing the drowsiness value in the first direction in which the drowsiness becomes higher". During the period in which the robot 1 operates in the sleep mode, in response to the drowsiness value decreasing from the value equal to or greater than the predetermined second threshold to the value less than the second threshold, the CPU 11 transitions the operation mode of the robot 1 from the sleep mode to the normal mode. According to the present embodiment, the second threshold is set to "90". "The drowsiness value decreasing from the value equal to or greater than the second threshold to the value less than the second threshold" corresponds to "the drowsiness value changes toward a second direction side across the second threshold". Decreasing the drowsiness value corresponds to "changing the drowsiness value in the second direction that decreases the drowsiness value, the second direction being opposite to the first direction". By setting the second threshold to be less than the first threshold in this manner, that is, by setting the second threshold to be the value toward the second direction side than the first threshold, hysteresis can be imparted to the transition of the operation mode. Thus, it is possible to suppress the transition between the normal mode and the sleep mode being frequently repeated. The first threshold is not limited to "95", and the second threshold is not limited to "90". The value greater than 100, for example, 150, may be set as the maximum value of the drowsiness value. In response to the drowsiness value reaching the maximum value (for example, 150) or in response to the drowsiness value becoming equal to or greater than the predetermined threshold greater than 100, the robot 1 may be operated in a deep sleep mode indicating that the robot 1 is sleeping soundly.

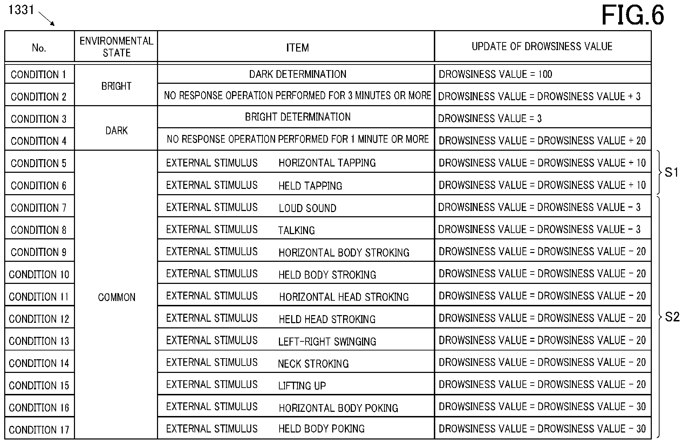

The CPU 11 increases or decreases the drowsiness value (that is, changes or updates the drowsiness value) in response to the change in the environmental state of the robot 1, a length of the period in which the robot 1 is left unattended, and the type of the external stimulus received by the robot 1. Increasing the drowsiness value corresponds to changing the drowsiness value in the first direction. Decreasing the drowsiness value corresponds to changing the drowsiness value in the second direction. Updating the drowsiness value is performed based on the drowsiness value table 1331 illustrated in FIG. 6. In the drowsiness value table 1331, for each of a plurality of conditions, how to update the drowsiness value in response to the condition being satisfied is determined and registered in advance. The plurality of conditions in the drowsiness value table 1331 relate to, for example, the change in the environmental state, a status of the robot 1 being left unattended, and the type of the external stimulus received by the robot 1.

In response to an environment around the robot 1 being switched from a bright place to a dark place, a "condition 1" in the drowsiness value table 1331 is satisfied. More specifically, "condition 1" is satisfied in response to the "environmental state" of the state data 132 being "bright" and a predetermined determination condition of "dark determination" being satisfied. The determination condition of "dark determination" is satisfied, for example, in response to "a detected illuminance detected by the illuminance sensor 53 continuously falling below a predetermined lower-limit illuminance for a predetermined time or more". The lower-limit illuminance may be, for example, approximately 1 to 1.5 lux. The predetermined time may be, for example, approximately 30 seconds to 1 minute. In response to the "condition 1" being satisfied, the CPU 11 updates the drowsiness value to "100" that is the maximum value. Accordingly, the robot 1 immediately transitions to the sleep mode. In response to the determination condition of the "dark determination" being satisfied, the "environmental state" of the state data 132 is changed to "dark". According to the "condition 1", it is possible to express a state in which the robot 1 becomes sleepy and falls asleep in response to switching of the environment around the robot 1 from the bright place to the dark place.

In response to the robot 1 being left unattended in the bright place for a certain time or more, a "condition 2" is satisfied. More specifically, in response to the "environmental state" of the state data 132 being "bright" and the robot 1 not performing the response operation in response to the external stimulus for a first reference time or more, that is, the robot 1 being left unattended for the first reference time or more, the "condition 2" is satisfied. According to the present embodiment, the first reference time is set to "3 minutes". In response to the "condition 2" being satisfied, the CPU 11 increases the drowsiness value by "3". According to the "condition 2", it is possible to express a situation in which the robot 1 gradually becomes sleepy in response to the state where the robot 1 does not receive the external stimulus continuing in the bright place.

In response to the surrounding environment around the robot 1 being switched from the dark place to the bright place, a "condition 3" is satisfied. More specifically, in response to the "environmental state" of the state data 132 being "dark" and the predetermined determination condition of "bright determination" being satisfied, the "condition 3" is satisfied. For example, in response to "the detected illuminance detected by the illuminance sensor 53 exceeding a predetermined upper-limit illuminance", the determination condition of the "bright determination" is satisfied. The upper-limit illuminance may be, for example, approximately 4 to 5 lux. In response to the "condition 3" being satisfied, the CPU 11 updates the drowsiness value to "3" that is the minimum value. Accordingly, the robot 1 immediately transitions to the normal mode. In response to the determination condition of the "bright determination" being satisfied, the "environmental state" of the state data 132 is changed to "bright". According to the "condition 3", it is possible to express a state in which the robot 1 wakes up in response to the switching of the surrounding environment around the robot 1 from the dark place to the bright place.

In response to the robot 1 being left unattended in the dark place for a certain time or more, a "condition 4" is satisfied. More specifically, in response to the "environmental state" of the state data 132 being "dark" and the robot 1 not performing the response operation in response to the external stimulus for a second reference time or more, that is, the robot 1 being left unattended for the second reference time or more, the "condition 4" is satisfied. According to the present embodiment, the second reference time is set to "1 minute". In response to the "condition 4" being satisfied, the CPU 11 increases the drowsiness value by "20". According to the "condition 4", it is possible to express a situation in which the robot 1 gradually becomes sleepy in response to the state where the robot 1 does not receive the external stimulus continuing in the dark place. Further, by setting the second reference time to be shorter than the first reference time, it is possible to express a tendency of becoming sleepy more easily in the dark place than in the bright place. Further, by setting an increase amount (20) of the drowsiness value in "condition 4" to be larger than an increase amount (3) of the drowsiness value in "condition 2", it is possible to express the tendency of becoming sleepy more easily in the dark place than in the bright place.

In response to determining that the robot 1 has received the external stimulus and the robot 1 has performed the response operation corresponding to the external stimulus, "condition 5" to "condition 17" are satisfied. The "condition 5" to "condition 17" are determined based only on whether or not the response operation corresponding to the external stimulus has been performed, regardless of whether the "environmental state" is "bright" or "dark". Conditions after "condition 18" may be further set for the external stimulus that is not illustrated in FIG. 6. In FIG. 6, the external stimulus includes "horizontal tapping", "held tapping", "loud voice", "talking", "horizontal body stroking", "held body stroking", "horizontal head stroking", "held head stroking", "left-right swinging", "neck stroking", "lifting up", "horizontal body poking", and "held body poking". "Horizontal" in these external stimuli indicates the external stimulus received in the state where the robot 1 is placed on a substantially horizontal surface. "Held" indicates the external stimulus received in the state where the robot 1 is held up by the user. "Tapping" indicates that the user lightly strikes the robot 1 with a palm of a hand or the like. The "tapping" is one example of communication performed by the user when the user wants to soothe the robot 1, put the robot 1 to sleep, or calm the robot 1 down. The "tapping" is also one example of communication performed reflecting an owner's psychology such as "cute", "important", and "want you to calm down". "Loud sound" indicates that the robot 1 has detected loud sound having a volume equal to or greater than a predetermined volume. "Talking" indicates that the robot 1 has detected a voice of the user talking to the robot 1. The robot 1 may be configured to be able to determine whether or not the voice is a voice of a particular user by subjecting the detection data obtained by the microphone 54 to a speech recognition process. "Body stroking" indicates that the user strokes the torso section 103 of the robot 1. "Head stroking" indicates that the user strokes the head section 101 of the robot 1. "Left-right swinging" indicates that the user lifts the robot 1 and swings the robot 1 left and right. "Neck stroking" indicates that the user strokes a portion between the head section 101 and the torso section 103 of the robot 1. "Lifting up" indicates that the user lifts the robot 1 and holds the robot 1 in arms of the user. "Body poking" (poking) indicates that the user lightly pokes the robot 1 with a fingertip or the like. "Body poking" is one example of communication performed by the user when the user wants to play with the robot 1, pay attention to the robot 1, or wake the robot 1 up. "Poking" is also one example of communication performed reflecting the owner's psychology such as "want to see a reaction", "want to pay attention", and "want you to pay attention to me".

"Stroking", "tapping", and "poking" are external stimuli that each involve contact with the head section 101 or the torso section 103, and it is difficult to distinguish and determine "stroking", "tapping", and "poking" only from the detection data obtained by the touch sensor 51 and the motion sensor 52. Therefore, according to the present embodiment, the detection data obtained by the microphone 54 is also used in addition to the touch sensor 51 and the motion sensor 52 to distinguish and determine these external stimuli. More specifically, for each of a plurality of external stimuli illustrated in FIG. 6, standard detection data (standard data) obtained by the touch sensor 51, the motion sensor 52, and the microphone 54 when the robot 1 receives each external stimulus are generated in advance and stored in the storage section 13. Then, similarity between the detection data acquired from the touch sensor 51, the motion sensor 52, and the microphone 54 at an arbitrary timing and the standard data of the plurality of external stimuli is derived, and an external stimulus corresponding to the standard data having highest similarity is determined as the external stimulus received by the robot 1. In this determination, the detection data and the standard data may be respectively converted into points in an n-dimensional space, and the similarity may be determined to be higher as a Euclidean distance between these points is shorter. According to such a method using the microphone 54, it is possible to distinguish and determine these external stimuli based on a difference in sound generated when "stroking", "tapping", and "poking" are respectively performed. "Stroking", "tapping", and "poking" may be distinguished and determined by a method other than the above. For example, "stroking", "tapping", and "poking" may be distinguished and determined by detecting an area in which contact occurs, or by detecting a shape and/or movement of a hand or finger of the user by a camera, an illuminance sensor, or the like.

The 13 types of external stimuli illustrated in FIG. 6 are classified into a first external stimulus S1 and a second external stimulus S2. The first external stimulus S1 is "horizontal tapping" and "held tapping", and an external stimulus other than these is the second external stimulus S2. Since "tapping" that is the first external stimulus S1 is the stimulus that calms the robot 1 down, in response to "condition 5" and "condition 6" corresponding to the first external stimulus S1 being satisfied, the drowsiness value is set to increase. The increase amount (change amount) of the drowsiness value is set to "10". Accordingly, in response to the CPU 11 determining that the robot 1 has received, as the first external stimulus S1, "horizontal tapping" or "held tapping" and causing the robot 1 to perform the response operation corresponding to the first external stimulus S1, the CPU 11 increases the drowsiness value by "10".

On the other hand, since each second external stimulus S2 is the stimulus that makes the robot 1 pleased or excited, in response to "condition 7" to "condition 17" corresponding to the second external stimulus S2 being satisfied, the drowsiness value is set to decrease. More specifically, in "condition 7" corresponding to "loud sound" and "condition 8" corresponding to "talking", a decrease amount (change amount) of the drowsiness value is set to "3". In "condition 9" to "condition 15" corresponding to "body stroking", "head stroking", "left-right swinging", "neck stroking", and "lifting up", a decrease amount of the drowsiness value is set to "20". In "condition 16" and "condition 17" corresponding to "horizontal body poking" and "held body poking", a decrease amount of the drowsiness value is set to "30". In this manner, a decrease amount of the drowsiness value is predetermined in association with each of the plurality of second external stimuli S2. In response to the CPU 11 determining that the robot 1 has received a second external stimulus S2 among the plurality of second external stimuli S2 and causing the robot 1 to perform the response operation corresponding to the second external stimulus S2, the CPU 11 decreases the drowsiness value by the decrease amount associated with the second external stimulus S2. The decrease amount (30) of the drowsiness value associated with "body poking" is greater than the decrease amount (3 or 20) of the drowsiness value associated with the second external stimulus S2 other than "body poking". This reflects that "body poking" is communication performed by the user when the user wants to wake the robot 1 up.

The increase amount and the decrease amount of the drowsiness value associated with each of the first external stimulus S1 and the second external stimulus S2 in FIG. 6 are examples and can be changed as appropriate. The external stimulus other than tapping may be classified as the first external stimulus S1, and the drowsiness value may be set to increase in response to the response operation corresponding to the external stimulus being performed. Further, an increase amount of the drowsiness value may be predetermined in association with each of a plurality of the first external stimuli S1, and in response to the CPU 11 determining that the robot 1 has received the first external stimulus S1 among the plurality of first external stimuli S1, the CPU 11 may increase the drowsiness value by the increase amount associated with the first external stimulus S1.

The response operation to the external stimulus is executed (started) when the robot 1 is not performing another operation, and is not executed (started) when the robot 1 is performing another operation. One response operation is approximately several seconds to 10 seconds. Thus, for example, in response to the user continuing the tapping of the robot 1, the response operation to the tapping is repeatedly executed every several seconds to 10 seconds, and each time the response operation is executed, the drowsiness value increases by 10. Accordingly, although it depends on the drowsiness value at the start of tapping, the drowsiness value exceeds 95 in approximately 1 minute, and the robot 1 transitions to the sleep mode (falls asleep). However, if some tapping is erroneously sensed as another external stimulus (for example, "body stroking"), the drowsiness value decreases against the user's intention, and the transition timing to the sleep mode is delayed. For this reason, during a period in which the robot 1 operates in the normal mode, in response to the CPU 11 determining that the robot 1 has been caused to perform the response operation corresponding to the tapping a plurality of times at a frequency satisfying the predetermined condition, the CPU 11 may transition the operation mode of the robot 1 to the sleep mode regardless of the drowsiness value at a time when the determination is made. In this case, the drowsiness value may be updated to "100" that is the maximum value and the transition to the sleep mode can be executed based on the updated drowsiness value. The "frequency satisfying a predetermined condition" can be appropriately determined depending on, for example, an assumed mode of communication between the user and the robot 1, and may be, for example, "five times or more in the most recent one-minute period".

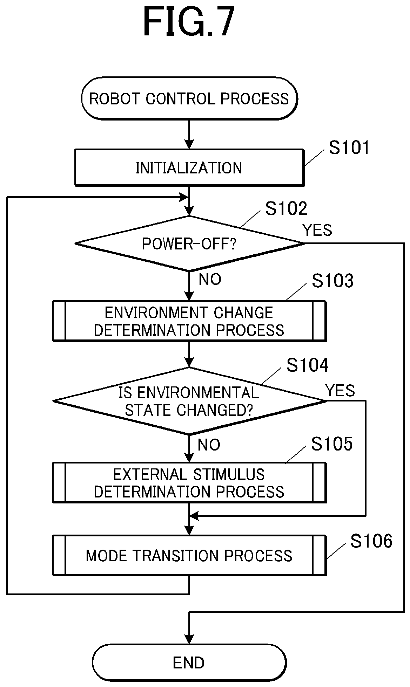

Next, the robot control process executed by the CPU 11 to realize the above-described operations of the robot 1 will be described with reference to FIGS. 7 to 11. The robot control process is started in response to the power of the robot 1 being turned on. As illustrated in FIG. 7, in response to the robot control process being started, the CPU 11 executes predetermined initialization processing (Step S101) and determines whether or not the robot 1 is to be brought into a power-off state (Step S102). Here, the CPU 11 determines that the robot 1 is to be brought into the power-off state in response to the operation to turn off the power being performed by the user or in response to a remaining battery capacity of the battery 71 being less than a predetermined lower-limit value. In response to determining that the robot 1 is not to be brought into the power-off state ("NO" in Step S102), the CPU 11 executes an environment change determination process (Step S103).

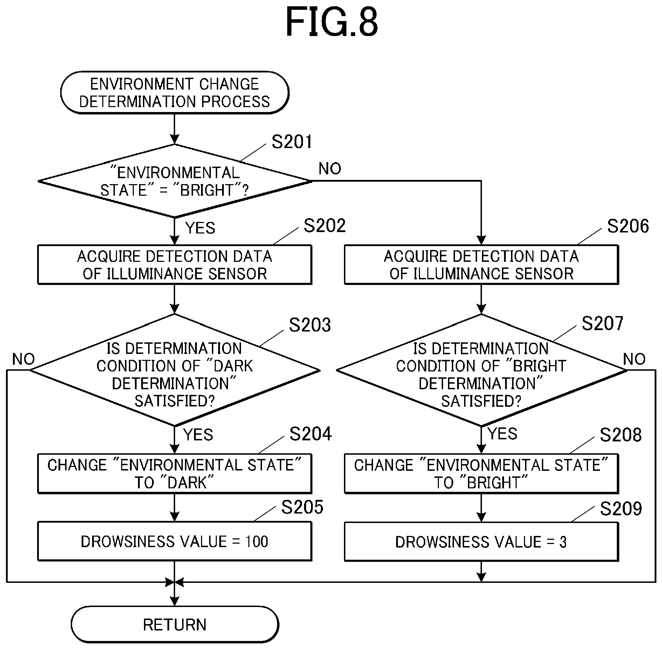

As illustrated in FIG. 8, in response to the environment change determination process being called, the CPU 11 determines whether or not the "environmental state" of the state data 132 is "bright" (Step S201). In response to determining that the "environmental state" is "bright" ("YES" in Step S201), the CPU 11 acquires the detection data of the illuminance sensor 53 (Step S202) and determines whether or not the above-described determination condition of "dark determination" is satisfied. In response to determining that the determination condition of "dark determination" is satisfied ("YES" in Step S203), the CPU 11 changes the "environmental state" of the state data 132 to "dark" (Step S204) and updates the drowsiness value to "100" (Step S205). On the other hand, in response to determining that the "environmental state" is "dark" in Step S201 ("NO" in Step S201), the CPU 11 acquires the detection data of the illuminance sensor 53 (Step S206) and determines whether or not the above-described determination condition of "bright determination" is satisfied. In response to determining that the determination condition of "bright determination" is satisfied ("YES" in Step S207), the CPU 11 changes the "environmental state" of the state data 132 to "bright" (Step S208) and updates the drowsiness value to "3" (Step S209). In response to Step S205 or Step S209 ending, or in response to the process branching to "NO" in Step S203 or Step S207, the CPU 11 ends the environment change determination process and returns the process to the robot control process of FIG. 7.

In response to the environment change determination process (Step S103) ending, the CPU 11 determines whether or not the environmental state has been changed in the environment change determination process (Step S104). Here, the CPU 11 determines that the environmental state has been changed in response to Step S204 or Step S208 of the environment change determination process of FIG. 8 being executed. In response to determining that the environmental state has not been changed ("NO" in Step S104), the CPU 11 executes an external stimulus determination process (Step S105).

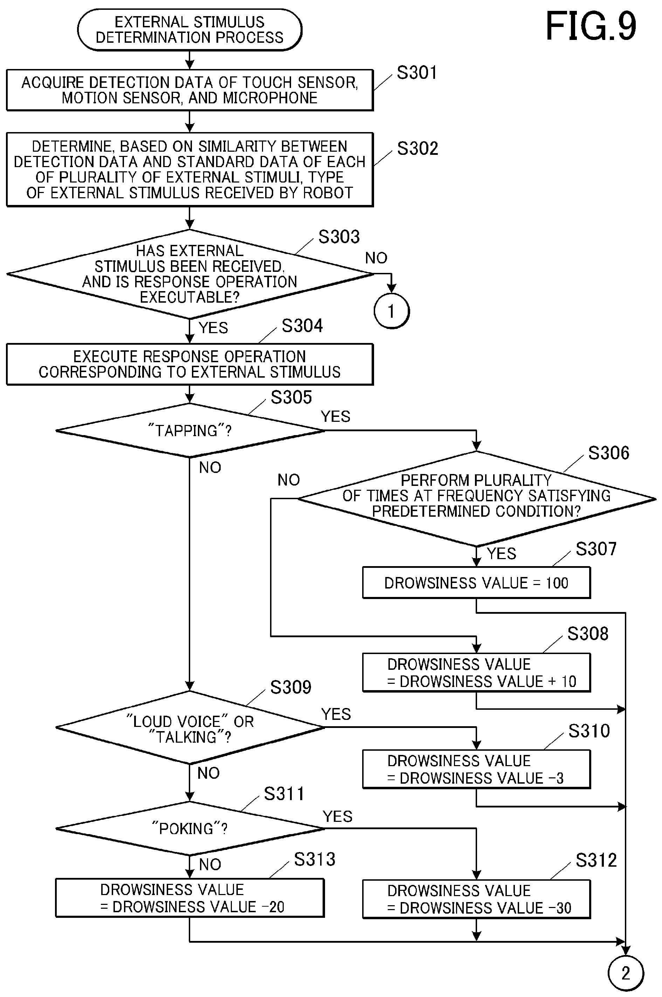

As illustrated in FIG. 9, in response to the external stimulus determination process being called, the CPU 11 acquires the detection data of the touch sensor 51, the motion sensor 52, and the microphone 54 (Step S301). As described above, the CPU 11 derives the similarity between the acquired detection data and the standard data for each of the plurality of external stimuli, and determines the type of the external stimulus received by the robot 1 based on the similarity (Step S302). That is, the CPU 11 determines that the external stimulus corresponding to the standard data having highest similarity is the external stimulus received by the robot 1. In Step S302, in response to the similarity with all external stimuli being less than the predetermined reference value, the CPU 11 determines that the robot 1 has not received the external stimulus. The CPU 11 determines whether or not the robot 1 has received the external stimulus and whether or not the response operation is executable (Step S303). Here, the CPU 11 determines that the response operation is executable in response to another response operation not being executed. In response to determining that the robot 1 has received the external stimulus and that the response operation is executable ("YES" in Step S303), the CPU 11 determines the response operation corresponding to the external stimulus by the above-described method and causes the robot 1 to perform the response operation (Step S304).

In response to the CPU 11 causing the robot 1 to perform the response operation corresponding to "tapping" in Step S304 ("YES" in Step S305), the CPU 11 determines whether or not the response operation corresponding to "tapping" has been performed a plurality of times at a frequency satisfying the predetermined condition (Step S306). In response to determining that the response operation to "tapping" has been performed a plurality of times at the frequency satisfying the predetermined condition ("YES" in Step S306), the CPU 11 updates the drowsiness value to "100" (Step S307). On the other hand, in response to the process branching to "NO" in Step S306, the CPU 11 increases the drowsiness value by "10" (Step S308). Step S306 and Step S307 may be omitted, and, in response to the response operation corresponding to "tapping" being performed, the drowsiness value may be uniformly increased by "10". In response to the processing branching to "NO" in Step S305 and the CPU 11 causing the robot 1 to perform the response operation corresponding to "loud voice" or "talking" in Step S304 ("YES" in Step S309), the CPU 11 decreases the drowsiness value by "3" (Step S310). In response to the processing branching to "NO" in Step S309 and the CPU 11 causes the robot 1 to perform the response operation corresponding to "poking" in Step S304 ("YES" in Step S311), the CPU 11 decreases the drowsiness value by "30" (Step S312). On the other hand, in response to the CPU 11 causing the robot 1 to perform the response operation corresponding to the external stimulus other than "tapping", "loud voice", "talking", and "poking" in Step S304 ("NO" in Step S311), the CPU 11 decreases the drowsiness value by "20" (Step S313).

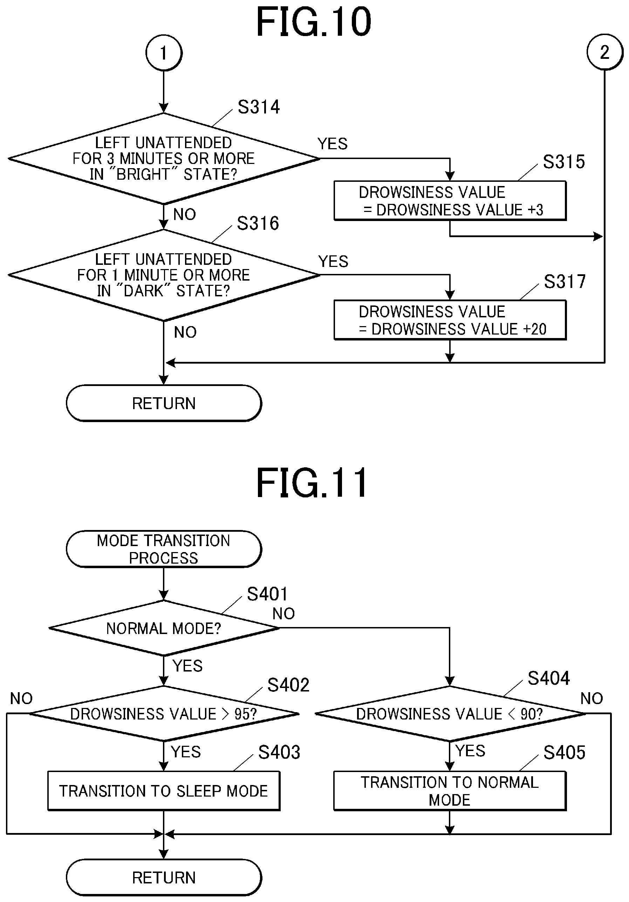

On the other hand, in Step S303, in response to determining that the robot 1 has not received the external stimulus or that the response operation is not executable ("NO" in Step S303), as illustrated in FIG. 10, the CPU 11 determines whether or not the robot 1 has been left unattended for 3 minutes or more in a state where the environmental state is "bright" (whether or not the robot 1 has not performed the response operation corresponding to the external stimulus for 3 minutes or more) (Step S314). In response to determining that the robot 1 has been left unattended for 3 minutes or more ("YES" in Step S314), the CPU 11 increases the drowsiness value by "3" (Step S315). In response to the processing branching to "NO" in Step S314, the CPU 11 determines whether or not the robot 1 has been left unattended for 1 minute or more in a state where the environmental state is "dark" (whether or not the robot 1 has not performed the response operation corresponding to the external stimulus for 1 minute or more) (Step S316). In response to determining that the robot 1 has been left unattended for 1 minute or more ("YES" in Step S316), the CPU 11 increases the drowsiness value by "20" (Step S317). In response to the processing branching to "NO" in Step S316, or in response to any one of Step S307, Step S308, Step S310, Step S312, Step S313, Step S315, and Step S317 being executed, the CPU 11 ends the external stimulus determination process and returns the processing to the robot control process of FIG. 7.

In response to the external stimulus determination process (Step S105) ending or in response to determining, in Step S104, that the environmental state has been changed ("YES" in Step S104), the CPU 11 executes a mode transition process (Step S106). As illustrated in FIG. 11, in response to the mode transition process being called, the CPU 11 determines whether or not the robot 1 operates in the normal mode (Step S401). In response to determining that the robot 1 operates in the normal mode ("YES" in Step S401), the CPU 11 determines whether or not the drowsiness value of the state data 132 is greater than 95 (Step S402). In response to determining that the drowsiness value is greater than 95 ("YES" in Step S402), the CPU 11 transitions the robot 1 to the sleep mode (Step S403). The CPU 11 further updates the operation mode of the state data 132 to "sleep mode". On the other hand, in response to determining, in Step S401, that the robot 1 is operating in the sleep mode ("NO" in Step S401), the CPU 11 determines whether or not the drowsiness value of the state data 132 is less than 90 (Step S404). In response to determining that the drowsiness value is less than 90 ("YES" in Step S404), the CPU 11 transitions the robot 1 to the normal mode (Step S405). The CPU 11 further updates the operation mode of the state data 132 to "normal mode". In response to Step S403 or Step S405 ending, or in response to the processing branching to "NO" in Step S402 or Step S404, the CPU 11 ends the mode transition process and returns the processing to the robot control process of FIG. 7.

In response to the mode transition process (Step S106) ending, the CPU 11 returns the processing to Step S102. Loop processing of Steps S102 to S106 is repeatedly executed at a predetermined frequency (for example, several hundred msec). In Step S102, in response to determining that the robot 1 is to be brought into the power-off state ("YES" in Step S102), the CPU 11 ends the robot control process.

As described above, the control apparatus 10 according to the present embodiment includes the CPU 11. The CPU 11 transitions, based on the drowsiness value representing a degree of pseudo drowsiness of the robot 1, the operation mode of the robot 1 between the normal mode representing that the robot 1 is not sleeping and the sleep mode representing that the robot 1 is sleeping. The CPU 11 determines the type of the external stimulus received by the robot 1 based on the detection data obtained by the touch sensor 51, the motion sensor 52, and the microphone 54 included in the robot 1. In response to determining that the type of the external stimulus received by the robot 1 is the predetermined first external stimulus S1, the CPU 11 increases the drowsiness value. In response to determining that the type of the external stimulus received by the robot 1 is the second external stimulus S2 different from the first external stimulus S1, the CPU 11 decreases the drowsiness value. Accordingly, in response to the user performing communication involving the first external stimulus S1 to the robot 1, the drowsiness value of the robot 1 can be increased so that the robot 1 transitions to the sleep mode (falls asleep). Further, in response to the user performing communication involving the second external stimulus S2 to the robot 1, since the drowsiness value of the robot 1 decreases, it is possible to prevent the robot 1 from transitioning to the sleep mode or to cause the robot 1 to transition from the sleep mode to the normal mode (wake up). In this manner, the reaction in which the robot 1 becomes sleepy or wakes up depending on the type of external stimulus is the reaction like the living thing. Therefore, according to the control apparatus 10 of the present embodiment, it is possible to realize the transition to the sleep mode that makes the robot look like the living thing.

Further, the CPU 11 causes the robot 1 to perform the response operation corresponding to the determined type of external stimulus. In response to the CPU 11 determining that the robot 1 has received the first external stimulus S1, the CPU 11 causes the robot 1 to perform the response operation corresponding to the first external stimulus S1 and increases the drowsiness value. In response to the CPU 11 determining that the robot 1 has received the second external stimulus S2, the CPU 11 causes the robot 1 to perform the response operation corresponding to the second external stimulus S2 and decreases the drowsiness value. Thus, the drowsiness value can be changed with a trigger that the robot 1 has accepted the external stimulus and performed the response operation. Therefore, since it is possible to estimate, to some extent, that the drowsiness value has changed from the response operation of the robot 1, the transition to the sleep mode can be made to look more natural like the living thing.

Further, the first external stimulus S1 is tapping on the robot 1. Thus, a user experience of calming the robot 1 down or causing the robot 1 to fall asleep by tapping on the robot 1 can be realized.

Further, the decrease amount of the drowsiness value is predetermined in association with each of the plurality of second external stimuli S2 different from each other. In response to the CPU 11 determining that the robot 1 has received the second external stimulus S2 among the plurality of second external stimuli S2, the CPU 11 decreases the drowsiness value by the decrease amount associated with the second external stimulus S2. Thus, it is possible to produce the effect such that how the robot 1 wakes up differs depending on the type of the second external stimulus S2.

Further, the plurality of second external stimuli S2 include "poking" on the robot 1, and the decrease amount of the drowsiness value associated with the "poking" is greater than the decrease amount of the drowsiness value associated with the second external stimulus S2 other than the "poking" among the plurality of second external stimuli S2. Thus, the user experience in which the robot 1 tends to wake up by poking on the robot 1 can be realized.

Further, during the period in which the robot 1 operates in the normal mode, in response to the CPU 11 determining that the robot 1 has been caused to perform the response operation corresponding to the first external stimulus S1 a plurality of times at the frequency satisfying the predetermined condition, the CPU 11 may transition the operation mode of the robot 1 to the sleep mode. Thus, in a situation where the user is repeatedly performing communication involving the first external stimulus S1 to cause the robot 1 to fall asleep, even if the external stimulus is erroneously sensed, the robot 1 can be transitioned to the sleep mode as intended by the user.

Further, during the period in which the robot 1 operates in the normal mode, in response to the drowsiness value increasing across the predetermined first threshold, the CPU 11 transitions the operation mode of the robot 1 to the sleep mode. Further, during the period in which the robot 1 operates in the sleep mode, in response to the drowsiness value decreasing across the predetermined second threshold, the CPU 11 transitions the operation mode of the robot 1 to the normal mode. Further, the second threshold is less than the first threshold. By setting the second threshold to be less than the first threshold in this manner, hysteresis can be imparted to the transition of the operation mode. Thus, it is possible to suppress the transition between the normal mode and the sleep mode being frequently repeated.

Further, the robot 1 according to the present embodiment includes the control apparatus 10, the touch sensor 51, the motion sensor 52, and the microphone 54. Thus, it is possible to realize the robot 1 that transitions to the sleep mode so as to look like the living thing.

Further, according to a determination method according to the present embodiment, by the CPU 11 executing the above processing, it is possible to realize the transition to the sleep mode that makes the robot look like the living thing. Further, the program 131 according to the present embodiment causes the CPU 11 to execute the above processing. Thus, it is possible to realize the transition to the sleep mode that makes the robot look like the living thing.

Further, according to the present disclosure, control for updating the drowsiness value in accordance with a determination result of the external stimulus and transitioning the operation mode between the normal mode and the sleep mode based on the drowsiness value after the update can be implemented at least as the update and transition process for the drowsiness value and the operation mode, and therefore the control processing can be executed with a relatively simple processing procedure and a load of arithmetic processing in the processor can be suppressed.

Further, according to the present disclosure, since information used for operation determination can be limited based on the operation mode and the drowsiness value, an amount of temporary data held in a work memory can be suppressed.

The present disclosure is not limited to the above embodiment, and various changes can be made. For example, in the above embodiment, in response to the response operation corresponding to the external stimulus being performed by the robot 1, the drowsiness value is increased or decreased depending on the type of the external stimulus, however, the present disclosure is not limited thereto. For example, at a stage where it is determined that the robot 1 has received the external stimulus, the drowsiness value may be increased or decreased depending on the type of the external stimulus.

Further, although an aspect in which the drowsiness is stronger as the drowsiness value is larger has been exemplified, the present disclosure is not limited thereto, and the drowsiness value may be a parameter indicating that the drowsiness is stronger as the value is smaller. In this case, the "first direction" corresponds to a direction in which the drowsiness value decreases, and the "second direction" corresponds to a direction in which the drowsiness value increases. Further, in response to determining that the robot 1 has received the first external stimulus S1, or in response to the robot 1 being caused to perform the response operation corresponding to the first external stimulus S1, the drowsiness value may be decreased. Further, in response to determining that the robot 1 has received the second external stimulus S2, or in response to the robot 1 being caused to perform the response operation corresponding to the second external stimulus S2, the drowsiness value may be increased. Further, the second threshold may be set to the value greater than the first threshold.

Further, the configuration of the robot 1 is not limited to the configuration exemplified in FIGS. 1 to 3 and FIG. 5. For example, the robot 1 may be a robot imitating an existing living thing such as a person, an animal, a bird, or a fish, a robot imitating a living thing that does not exist such as a dinosaur, or a robot imitating a fictional living thing.

In the above description, an example in which a flash memory of the storage section 13 is used as a computer-readable medium of a program according to the present disclosure has been disclosed, however, the present disclosure is not limited to this example.

As another computer-readable medium, an information recording medium such as an HDD (Hard Disk Drive), an SSD (Solid State Drive), or a CD-ROM is applicable. Further, a carrier wave is also applicable to the present disclosure as a medium that provides data of a program according to the present disclosure via a communication line.

Further, it is needless to say, the detailed configurations and detailed operations of respective components of the robot 1 according to the above embodiment can be changed as appropriate within a range not departing from the scope of the present disclosure. Although the embodiments of the present disclosure have been described, the scope of the present disclosure is not limited to the above embodiments and includes the scope of the invention described in the claims and equivalents thereof.

## Claims

1. A control apparatus (10) comprising:
one or more processors (11) configured to:
transition, based on a drowsiness value representing a degree of pseudo drowsiness of a robot (1), an operation mode of the robot between a normal mode representing that the robot (1) is not sleeping and a sleep mode representing that the robot (1) is sleeping,
determine, based on detection data from a sensor (50) included in the robot (1), a type of an external stimulus received by the robot (1),
in response to determining that the type of the external stimulus received by the robot (1) is a predetermined first external stimulus (S1), change the drowsiness value in a first direction in which the drowsiness becomes higher, and
in response to determining that the type of the external stimulus received by the robot (1) is a second external stimulus (S2) different from the first external stimulus (S1), change the drowsiness value in a second direction that decreases the drowsiness value, the second direction being opposite to the first direction.

2. The control apparatus (10) according to claim 1, wherein,
the one or more processors (11) are configured to cause the robot (1) to perform a response operation corresponding to the determined type of the external stimulus,
in response to determining that the robot (1) received the first external stimulus (S1), the robot (1) is caused to perform the response operation corresponding to the first external stimulus (S1) and the drowsiness value is changed in the first direction, and
in response to determining that the robot (1) received the second external stimulus (S2), the robot is caused to perform the response operation corresponding to the second external stimulus (S2) and the drowsiness value is changed in the second direction.

3. The control apparatus (10) according to claim 1 or 2, wherein the first external stimulus (S1) is tapping on the robot (1).

4. The control apparatus (10) according to any one of claims 1 to 3, wherein,
a change amount of the drowsiness value is predetermined in association with each of a plurality of the second external stimuli (S2) different from each other, and
the one or more processors (11) are configured to, in response to determining that the robot (1) received the second external stimulus (S2) among the plurality of second external stimuli (S2), change the drowsiness value in the second direction by the change amount associated with the second external stimulus (S2).

5. The control apparatus (10) according to claim 4, wherein,
the plurality of second external stimuli (S2) include poking on the robot (1), and
the change amount of the drowsiness value associated with the poking is greater than the change amount of the drowsiness value associated with the second external stimulus (S2) other than the poking among the plurality of second external stimuli (S2).

6. The control apparatus (10) according to claim 2, wherein the one or more processors (11) are configured to, during a period in which the robot (1) operates in the normal mode, in response to determining that the robot (1) performed the response operation corresponding to the first external stimulus (S1) a plurality of times at a frequency satisfying a predetermined condition, transition the operation mode of the robot (1) to the sleep mode.

7. The control apparatus (10) according to any one of claims 1 to 6, wherein,
the one or more processors (11) are configured to,
during a period in which the robot (1) operates in the normal mode, in response to the drowsiness value changing toward a first direction side across a predetermined first threshold, transition the operation mode of the robot (1) to the sleep mode, and
during a period in which the robot (1) operates in the sleep mode, in response to the drowsiness value changing toward a second direction side across a predetermined second threshold, transition the operation mode of the robot (1) to the normal mode, and
wherein the second threshold is a value further toward the second direction side than the first threshold.

8. A robot (1) comprising:
the control apparatus (10) according to any one of claims 1 to 7; and
the sensor (50).

9. A control method executed by a computer (11), the method comprising:
transitioning, based on a drowsiness value representing a degree of pseudo drowsiness of a robot (1), an operation mode of the robot between a normal mode representing that the robot (1) is not sleeping and a sleep mode representing that the robot (1) is sleeping,
determining, based on detection data from a sensor (50) included in the robot (1), a type of an external stimulus received by the robot (1),
in response to determining that the type of the external stimulus received by the robot (1) is a predetermined first external stimulus (S1), changing the drowsiness value in a first direction in which the drowsiness becomes higher, and
in response to determining that the type of the external stimulus received by the robot (1) is a second external stimulus (S2) different from the first external stimulus (S1), changing the drowsiness value in a second direction that decreases the drowsiness value, the second direction being opposite to the first direction.

10. A program (131) for causing a computer (11) to:
transition, based on a drowsiness value representing a degree of pseudo drowsiness of a robot (1), an operation mode of the robot between a normal mode representing that the robot (1) is not sleeping and a sleep mode representing that the robot (1) is sleeping,
determine, based on detection data from a sensor (50) included in the robot (1), a type of an external stimulus received by the robot (1),
in response to determining that the type of the external stimulus received by the robot (1) is a predetermined first external stimulus (S1), change the drowsiness value in a first direction in which the drowsiness becomes higher, and
in response to determining that the type of the external stimulus received by the robot (1) is a second external stimulus (S2) different from the first external stimulus (S1), change the drowsiness value in a second direction that decreases the drowsiness value, the second direction being opposite to the first direction.
